# FASCICULE DE BREVET EUROPEEN

(11) **EP 3 912 519 B1**
(45) Date de publication et mention de la délivrance du brevet: **21.08.2024**
(21) Numéro de dépôt: 21174556.7
(22) Date de dépôt: 18.05.2021
(51) Int. Cl.: A47J 27/04

(54) **ENCEINTE DE CUISSON AVEC INJECTION DE VAPEUR**
KOCHKAMMER MIT DAMPFINJEKTION
COOKING CHAMBER WITH STEAM INJECTION

(30) Priorité: 19.05.2020 FR 2005052
(43) Date de publication de la demande: 24.11.2021
(73) Titulaire: SEB S.A., 69130 Ecully (FR)
(72) Inventeur: MUGNIER, Cédric, 21120 PICHANGES (FR)
(74) Mandataire: SEB Développement

(56) Documents cités:
- WO-A1-2009/026760
- WO-A1-2019/007807
- CN-A- 107 865 577
- US-A- 4 728 762

## Description

### DOMAINE DE L'INVENTION

La présente invention concerne le domaine des enceintes de cuisson destinées à être insérées dans des appareils de cuisson, plus particulièrement des enceintes de cuisson permettant de réaliser une cuisson vapeur.

### ETAT DE LA TECHNIQUE

Un appareil de cuisson comprend une enceinte de cuisson destinée à recevoir des aliments à cuire.

Certains appareils de cuisson et de préparation d'aliments proposent une cuisson des aliments reçus dans l'enceinte sans brassage des aliments.

Par ailleurs, certains appareils de cuisson proposent une cuisson des aliments avec un faible apport en matière grasse, à l'aide par exemple d'une circulation d'un flux d'air chaud dans l'enceinte de cuisson, à proximité des aliments à cuire. Ainsi, des friteuses sans huile à cuisson par air chaud sans brassage permettent de préparer et de cuire des frites de pomme de terre avec un apport très faible en matière grasse.

Le document WO 2016/062513 et le document WO 2017/178229 décrivent des appareils de cuisson sans brassage, qui proposent de combiner un mode de cuisson air chaud avec un mode de cuisson vapeur. La vapeur est injectée dans la partie haute de la cuve, au-dessus des aliments à cuire.

Néanmoins, ces appareils ne permettent pas une utilisation performante de la vapeur. En effet, la vapeur étant plus légère que l'air de cuisson, une quantité non négligeable de vapeur est ré-aspirée à travers le haut de la cuve et à travers l'échappement, sans être entrée au contact des aliments à cuire, donc sans participer à la cuisson des aliments. Par ailleurs, la cuve doit être remplie et saturée de vapeur avant que la vapeur n'entre en contact avec les aliments pour démarrer leur cuisson. Une durée qui peut être importante peut donc s'écouler entre le début de l'injection de la vapeur et le moment où la cuisson vapeur est effectivement initiée. Enfin, la vapeur entre en contact avec la partie haute des aliments reçus dans la cuve avant d'entrer en contact avec la partie basse des aliments, qui est au contact du fond de la cuve. La vapeur a donc tendance à cuire d'abord la partie haute des aliments, ce qui peut provoquer une cuisson inégale et non homogène des aliments.

Le document WO 2009/026760 A1 décrit un appareil de cuisson pour réaliser une cuisson vapeur. Cet appareil de cuisson comporte une enceinte de cuisson comprenant plusieurs étagères sur lesquelles peuvent être déposés des aliments. Cependant, cette enceinte de cuisson n'est pas indépendante de l'appareil de cuisson.

### EXPOSE DE L'INVENTION

Un but de l'invention est de proposer une enceinte de cuisson qui permette à l'appareil dans lequel elle est insérée de proposer une cuisson vapeur présentant une efficacité améliorée.

Selon un premier aspect, l'invention concerne une enceinte de cuisson destinée à être insérée dans un appareil de cuisson pour réaliser une cuisson vapeur, l'enceinte comprenant une cuve ayant un fond, une paroi latérale, et une ouverture opposée au fond, caractérisée en ce que l'enceinte comprend en outre un conduit de circulation de vapeur s'étendant entre une première ouverture prévue pour être mise en communication fluidique avec un système de génération de vapeur de l'appareil de cuisson, et une deuxième ouverture formant une buse d'injection de vapeur, la buse d'injection de vapeur étant agencée pour déboucher au niveau du fond de la cuve pour une circulation de vapeur depuis le fond de la cuve vers l'ouverture de la cuve. Certaines caractéristiques préférées mais non limitatives de l'enceinte de cuisson décrite ci-dessus sont les suivantes, prises individuellement ou en combinaison :
- le conduit de circulation de vapeur s'étend au moins en partie parallèlement à la paroi latérale de la cuve ;
- le conduit de circulation de vapeur présente une première partie de conduit agencée le long de la paroi latérale de la cuve et une deuxième partie de conduit attenant au fond de la cuve ;
- le conduit de circulation de vapeur est agencé à l'intérieur d'un volume défini par le fond et la paroi latérale de la cuve ;
- le conduit de circulation de vapeur est agencé au moins en partie à l'extérieur d'un volume défini par le fond et la paroi latérale de la cuve ;
- le conduit de circulation de vapeur comprend des orifices complémentaires formant chacun un orifice d'injection de vapeur, les orifices d'injection de vapeur étant répartis le long du conduit de circulation de vapeur ;
- l'enceinte comprend en outre un panier destiné à être inséré de manière amovible dans la cuve, le panier comprenant un fond ajouré, une ouverture opposée au fond et une paroi latérale adaptés pour définir un volume de réception d'aliments à cuire, la paroi latérale du panier et le fond du panier étant maintenus respectivement à distance de la paroi latérale de la cuve et du fond de la cuve pour définir un espace de circulation d'air.

Selon un deuxième aspect, l'invention concerne un appareil de cuisson comprenant une enceinte de cuisson selon le premier aspect et un châssis comprenant un système de génération de vapeur, le châssis étant prévu pour recevoir l'enceinte de manière amovible de sorte que lorsque l'enceinte est reçue dans le châssis, la première ouverture du conduit de circulation de vapeur est en communication fluidique avec le système de génération de vapeur.

L'appareil de cuisson peut comprendre en outre des moyens de chauffage du conduit de circulation de vapeur.

L'appareil de cuisson peut comprendre en outre un système d'étanchéité adapté pour raccorder de manière étanche la première ouverture du conduit de circulation de vapeur et le système de génération de vapeur.

Le châssis peut comprendre un conduit de circulation de vapeur additionnel pour relier le système de génération de vapeur à la première ouverture du conduit de circulation de vapeur de l'enceinte.

Le châssis peut comprendre en outre un dispositif de ventilation adapté pour insuffler de l'air dans la cuve de l'enceinte, et des moyens de chauffage disposés entre le dispositif de ventilation et la cuve de l'enceinte.

Selon un troisième aspect, l'invention concerne un procédé de cuisson destiné à être mis en oeuvre au moyen d'un appareil de cuisson selon le deuxième aspect, le procédé comprenant une étape de génération de vapeur par le système de génération de vapeur, dans lequel la vapeur générée débouche de la buse d'injection de vapeur au niveau du fond de la cuve de l'enceinte, puis circule dans la cuve depuis le fond de la cuve vers l'ouverture de la cuve.

Le procédé peut comprendre en outre une étape de chauffage du conduit de circulation de vapeur à l'aide de moyens de chauffage, dans lequel l'étape de chauffage est réalisée antérieurement à ou conjointement avec l'étape de génération de vapeur.

L'étape de génération de vapeur par le système de génération de vapeur peut être initiée lorsqu'une température dans la cuve dépasse un seuil prédéterminé.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
[Fig. 1] La figure 1 représente une vue de côté schématique d'un appareil de cuisson selon un premier mode de réalisation de l'invention.
[Fig. 2] La figure 2 représente une vue de côté schématique d'un appareil de cuisson selon un deuxième mode de réalisation de l'invention.

Sur l'ensemble des figures, les éléments identiques ou similaires sont désignés par des signes de référence numériques identiques.

### DESCRIPTION DETAILLEE DE L'INVENTION

### Enceinte de cuisson

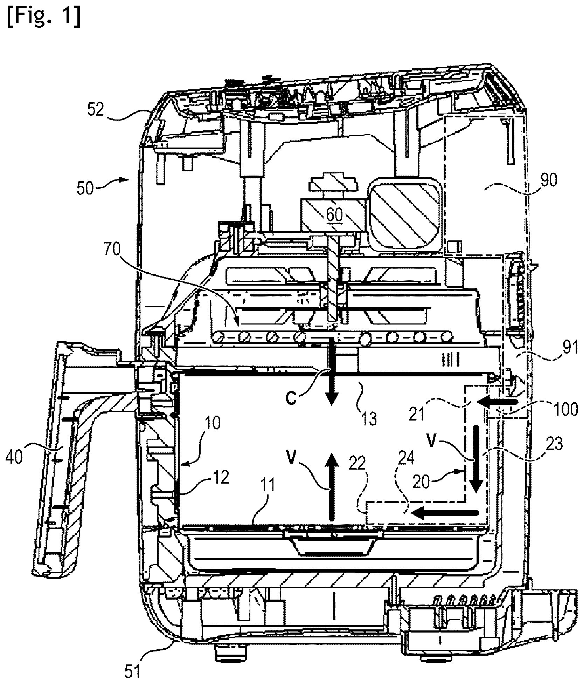

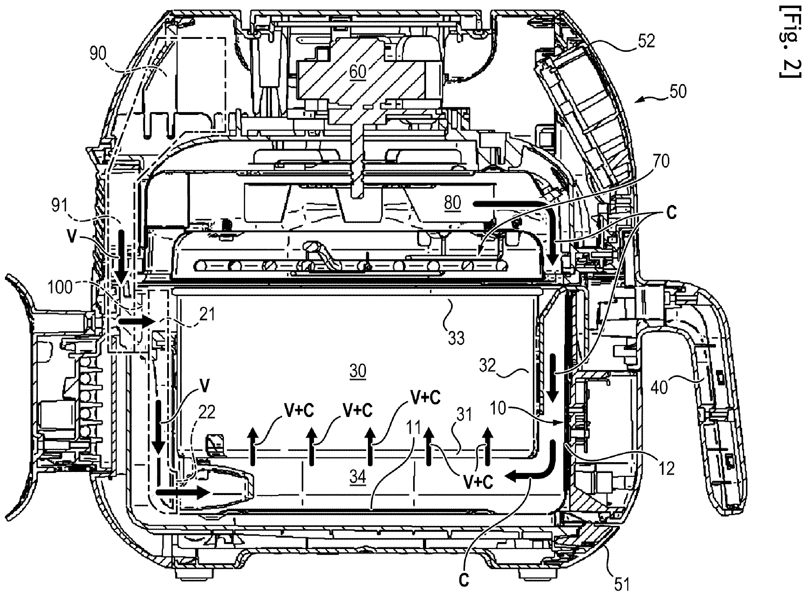

Une enceinte de cuisson destinée à être insérée dans un appareil de cuisson pour réaliser une cuisson vapeur est représentée à titre d'exemple non limitatif en figures 1 et 2.

L'enceinte comprend une cuve 10 ayant un fond 11, une paroi latérale 12, et une ouverture opposée au fond 11.

L'enceinte comprend en outre un conduit de circulation de vapeur 20 s'étendant entre une première ouverture 21 prévue pour être mise en communication fluidique avec un système de génération de vapeur 90 de l'appareil de cuisson, et une deuxième ouverture 22 formant une buse d'injection de vapeur.

La buse d'injection de vapeur 22 est agencée pour déboucher au niveau du fond 11 de la cuve 10 pour une circulation de vapeur V depuis le fond 11 de la cuve 10 vers l'ouverture 13 de la cuve 10.

Dans la suite de la description, les termes interne et externe sont utilisés en référence à une position radiale par rapport à un centre du fond 11 de la cuve 10, de sorte que la partie ou la face interne d'un élément est plus proche du centre du fond 11 de la cuve 10 que la partie ou la face externe du même élément.

Une hauteur correspond à une position selon une direction d'une distance entre le fond 11 de la cuve 10 et l'ouverture 13 opposée au fond 11. Le fond 11 de la cuve 10 est situé en une position basse de la cuve 10, et l'ouverture 13 de la cuve 10 est située en une position haute de la cuve 10.

Le terme « au niveau de » est utilisé en référence à une hauteur. Ainsi, la buse d'injection de vapeur 22 débouche en une hauteur sensiblement similaire à la hauteur du fond 11 de la cuve 10, c'est-à-dire dans la partie basse de la cuve 10.

La buse d'injection de vapeur 22 étant agencée pour déboucher au niveau du fond 11 de la cuve 10, la vapeur V est injectée dans la partie basse de la cuve 10. La vapeur V est donc injectée à proximité des aliments à cuire, voire sous les aliments à cuire.

Ainsi, la vapeur V amenée par le conduit de circulation de vapeur 20 au niveau du fond de la cuve 10 et injectée par la buse d'injection de vapeur 22 passe à travers les aliments à cuire, depuis le fond 11 vers l'ouverture 13 de la cuve 10. La vapeur V ne risque donc pas d'être ré-aspirée et évacuée à travers l'ouverture 13 de la cuve 10 avant d'être passée à travers les aliments. Ainsi, toute la vapeur V injectée entre en contact avec les aliments et contribue donc à la cuisson vapeur des aliments. Le contact et l'échange thermique entre la vapeur V et les aliments est donc garanti, et la cuisson vapeur est égale et homogène pour toutes les couches des aliments à cuire.

En outre, la vapeur V entre en contact avec les aliments, donc commence à cuire les aliments, dès le début de l'injection de vapeur V par le biais de la buse d'injection de vapeur 22 du conduit de circulation de vapeur 20. Il n'est donc pas nécessaire d'attendre la saturation en vapeur V de l'enceinte pour démarrer la cuisson vapeur. Ainsi, l'enceinte permet une cuisson vapeur homogène et rapide de toutes les parties et couches des aliments à cuire.

Par ailleurs, la vapeur V est confinée et concentrée à l'intérieur du conduit de circulation de vapeur 20. La surface de contact entre la vapeur V et l'enceinte de cuisson lors du déplacement de la vapeur V jusqu'à la buse d'injection de vapeur 22 est donc limitée par les dimensions du conduit de circulation de vapeur 20. La vapeur V n'est pas au contact de l'ensemble de la paroi latérale 12 de la cuve 10, mais est seulement au contact de la paroi du conduit de circulation de vapeur 20. Le temps de chauffe du conduit de circulation de vapeur 20 est plus rapide que celui de l'enceinte entière. Le refroidissement de la vapeur V lors de son passage dans le conduit de circulation de vapeur 20 est donc limité, ce qui permet de diminuer la condensation de la vapeur V lors de son injection, donc d'améliorer l'efficacité et la rapidité de la cuisson vapeur.

Le conduit de circulation de vapeur 20 peut être monté dans un appareil de cuisson existant, sans en perturber le fonctionnement. Le conduit de circulation de vapeur 20 permet à l'appareil de proposer un mode de cuisson vapeur, qui peut être utilisé en combinaison ou en alternative par rapport au(x) mode(s) de cuisson déjà proposé(s) par l'appareil. Par ailleurs, le conduit de circulation de vapeur 20 proposé est simple et peu coûteux à fabriquer.

L'enceinte de cuisson est adaptée pour recevoir des aliments à cuire.

La paroi latérale 12 de la cuve 10 peut s'étendre sensiblement orthogonalement au fond 11 de la cuve 10. La paroi latérale 12 peut présenter une forme de cylindre de révolution. Une génératrice du cylindre peut s'étendre selon la direction de la hauteur de la cuve 10.

Le fond 11 de la cuve 10 peut être sensiblement plan, la hauteur correspondant alors à direction orthogonale au plan du fond 11 de la cuve 10. Le fond 11 de la cuve 10 peut être sensiblement en forme de disque, un rayon du disque de fond 11 correspondant sensiblement à un rayon du cylindre de révolution de la paroi latérale 12.

La paroi latérale 12 et le fond 11 de la cuve 10 peuvent être formés d'une seule pièce ou être rapportés et fixés l'un sur l'autre.

La paroi latérale 12 peut présenter une extrémité basse raccordée au fond 11 de la cuve 10, et une extrémité haute libre délimitant l'ouverture 13 de la cuve 10. Les aliments peuvent être destinés à être insérés dans l'enceinte à travers l'ouverture 13 de cuve 10.

L'enceinte peut comprendre une poignée 40 permettant sa préhension par un utilisateur. La poignée 40 peut être solidaire de la cuve 10, de sorte à faciliter la mise en place et le retrait de la cuve 10 par un utilisateur.

Le conduit de circulation de vapeur 20 peut être monté dans l'enceinte de cuisson, en particulier dans la cuve 10. Le conduit de circulation de vapeur 20 peut être monté contre la paroi latérale 12 et/ou le fond 11 de la cuve 10. Ainsi, la paroi latérale 12 et/ou le fond 11 de la cuve 10 délimite partiellement le conduit de circulation de vapeur 20. Le conduit de circulation de vapeur 20 peut être collé à la paroi latérale 12 et/ou au fond 11 de la cuve 10

La première ouverture 21 du conduit de circulation de vapeur 20 peut être située en une position plus haute que la deuxième ouverture 22 du conduit de circulation de vapeur 20. En d'autres termes, la buse d'injection de vapeur 22 est plus proche du fond 11 de la cuve 10 que la première ouverture 21 du conduit de circulation de vapeur 20. La vapeur V circule donc dans le conduit de circulation de vapeur 20 depuis le haut vers le bas de la cuve 10.

La première ouverture 21 du conduit de circulation de vapeur 20 peut correspondre à une extrémité la plus haute du conduit de circulation de vapeur 20 et la deuxième ouverture 22 du conduit de circulation de vapeur 20 peut correspondre à une extrémité la plus basse du conduit de circulation de vapeur 20.

La buse d'injection de vapeur 22 peut déboucher en une position interne de la cuve 10, par exemple contre le fond 11 de la cuve 10 sensiblement à proximité du centre du fond 11, ou en une position externe de la cuve 10, par exemple sensiblement à proximité de la paroi latérale 12 de la cuve 10.

Le conduit de circulation de vapeur 20 peut s'étendre au moins en partie parallèlement à la paroi latérale 12 de la cuve 10, en particulier dans la direction de la hauteur de la cuve 10. La vapeur V circule donc dans le conduit de circulation de vapeur 20 depuis le haut vers le bas de la cuve 10 dans la direction de la hauteur de la cuve 10, ce qui minimise la distance parcourue par la vapeur V dans le conduit de circulation de vapeur 20 pour parvenir jusqu'au niveau du fond 11 de la cuve 10, et diminue donc la condensation de la vapeur V.

Le conduit de circulation de vapeur 20, en particulier la partie s'étendant parallèlement à la paroi latérale 12 de cuve 10, peut présenter une surface en forme de demi-cylindre de révolution. La génératrice du demi-cylindre de révolution s'étend dans la direction de la hauteur de la cuve 10. Le conduit de circulation de vapeur 20 peut être plaqué contre la paroi latérale 12. La paroi latérale 12 de la cuve 10 ferme alors le demi-cylindre de révolution du conduit de circulation de vapeur.

La paroi latérale 12 de la cuve 10 fermant le demi-cylindre de révolution du conduit de circulation de vapeur 20 peut correspondre à une surface externe du conduit de circulation de vapeur 20, le conduit de circulation de vapeur 20 étant alors monté dans la cuve 10. En variante, la paroi latérale 12 peut correspondre à une surface interne du conduit de circulation de vapeur 20, le conduit de circulation de vapeur 20 étant alors monté à l'extérieur de la cuve 10.

Une largeur du conduit de circulation de vapeur 20 correspond à un rayon du demi-cylindre de révolution. La largeur du conduit de circulation de vapeur 20 peut être faible par rapport à la hauteur du conduit de circulation de vapeur 20. Ainsi, la surface de contact de la vapeur V avec le conduit de circulation de vapeur 20 est restreinte car la surface du conduit de circulation de vapeur 20 est restreinte. Le refroidissement de la vapeur V lors de la circulation de la vapeur V dans le conduit de circulation de vapeur 20 est donc limité. La condensation résultante de la vapeur V est donc limitée, donc l'efficacité et la rapidité de la cuisson vapeur sont augmentées.

Dans un premier exemple de réalisation, le conduit de circulation de vapeur 20 s'étend dans son intégralité le long de la paroi latérale 12 de la cuve 10. Le conduit de circulation de vapeur 20 peut s'étendre dans son intégralité parallèlement à la paroi latérale 12 de la cuve 10, dans la direction de la hauteur, le conduit de circulation de vapeur 20 étant monté contre la paroi latérale 12. La surface de contact entre la vapeur V et le conduit de circulation de vapeur 20 est ainsi minimisée, ce qui minimise donc la condensation de la vapeur V et permet ainsi une cuisson vapeur rapide et efficace.

La buse d'injection de vapeur 22 débouche à proximité de la paroi latérale 12 de la cuve 10, au niveau du fond 11 de la cuve 10. La vapeur V est injectée à proximité de la paroi latérale 12 externe de la cuve 10.

Dans un deuxième exemple de réalisation, le conduit de circulation de vapeur 20 présente une première partie de conduit 23 agencée le long de la paroi latérale 12 de la cuve 10, et une deuxième partie de conduit 24 attenant au fond 11 de la cuve 10.

La première partie de conduit 23 peut s'étendre sensiblement dans la direction de la hauteur de la cuve 10. La deuxième partie de conduit 24 peut s'étendre sensiblement dans une direction radiale, c'est-à-dire une direction reliant la paroi latérale 12 et le centre du fond 11 de la cuve 10. La vapeur V est ainsi amenée au niveau du fond 11 de la cuve 10 par la première partie de conduit 23, et la vapeur V est ensuite amenée en une position interne de la cuve 10 par la deuxième partie de conduit 24. La surface de contact entre la vapeur V et le conduit de circulation de vapeur 20 est ainsi minimisée, ce qui minimise donc la condensation de la vapeur V et permet ainsi une cuisson vapeur rapide et efficace.

La buse d'injection de vapeur 22 débouche sensiblement à distance de la paroi latérale 12 de la cuve 10, en une position plus interne que la position de la paroi latérale 12. La buse d'injection de vapeur 22 peut déboucher sensiblement à proximité du centre du fond 11 de la cuve. Ainsi, la vapeur V est injectée sensiblement au centre du fond 11 de la cuve 10.

Le conduit de circulation de vapeur 20 peut être agencé à l'intérieur d'un volume défini par le fond 11 et la paroi latérale 12 de la cuve 10.

En variante, le conduit de circulation de vapeur 20 peut être agencé au moins en partie à l'extérieur d'un volume défini par le fond 11 et la paroi latérale 12 de la cuve 10. Alors, le conduit de circulation de vapeur 20 comprend une partie disposée au travers de la paroi latérale 12 ou du fond 11 de la cuve 10, de sorte que la vapeur V est injectée dans la cuve 10. Par exemple, la buse d'injection de vapeur 22 du conduit de circulation de vapeur 20 peut percer la paroi latérale 12 ou le fond 11 de la cuve 10.

Le conduit de circulation de vapeur 20 peut comprendre des orifices complémentaires formant chacun un orifice d'injection de vapeur. Les plusieurs orifices d'injection de vapeur sont répartis le long du conduit de circulation de vapeur. Les orifices d'injection de vapeur, comprenant la buse d'injection de vapeur 22 et les orifices complémentaires, sont répartis le long du conduit de circulation de vapeur 20. Ainsi, la vapeur V est injectée en plusieurs endroits dans la cuve 10, ce qui améliore l'homogénéité de la cuisson vapeur résultante.

Les orifices complémentaires d'injection de vapeur peuvent tous présenter des dimensions identiques, qui peuvent être identiques aux dimensions de la buse d'injection de vapeur 22. En variante, les orifices complémentaires d'injection de vapeur peuvent présenter des dimensions variables en fonction de leur position, de sorte à optimiser la cuisson.

Dans le premier exemple de réalisation, c'est-à-dire lorsque le conduit de circulation de vapeur 20 s'étend dans son intégralité le long de la paroi latérale 12 de la cuve 10, le conduit de circulation de vapeur 20 peut présenter une première portion et une deuxième portion.

La première portion s'étend dans la direction de la hauteur de la cuve 10, depuis la première ouverture 21 jusqu'à une position au niveau du fond 11 de l'enceinte.

La deuxième portion s'étend sensiblement le long de la paroi latérale de la cuve, orthogonalement à la direction de la hauteur, dans un plan sensiblement parallèle au fond 11 de la cuve 10. En particulier, la deuxième portion du conduit de circulation de vapeur 20 peut s'étendre selon une direction transversale, c'est-à-dire selon une direction perpendiculaire à une direction radiale et à une direction de la hauteur.

La deuxième portion du conduit de circulation de vapeur 20 peut s'étendre de sorte à former un contour fermé. Lorsque la paroi latérale 12 est en forme de cylindre de révolution, la deuxième portion du conduit de circulation de vapeur 20 peut définir sensiblement un cercle dans un plan parallèle au fond 11 de la cuve 10, un rayon du cercle formé par le conduit de circulation de vapeur 20 correspondant sensiblement à un rayon du cylindre de révolution formé par la paroi latérale 12. La deuxième portion du conduit de circulation de vapeur 20 définit ainsi une circonférence de la paroi latérale 12.

Les orifices complémentaires d'injection de vapeur peuvent être sensiblement équirépartis le long de la deuxième portion du conduit de circulation de vapeur 20. Ainsi, la vapeur est injectée dans la cuve 10 de manière homogène, en différents endroits circonférentiellement répartis le long de la paroi latérale 12 au niveau du fond 11 de la cuve 10. La cuisson des aliments reçus dans l'enceinte de cuisson est donc plus homogène.

Dans le deuxième exemple de réalisation, c'est-à-dire lorsque le conduit de circulation de vapeur 20 présente une première partie 23 agencée le long de la paroi latérale 12 de la cuve 10 et une deuxième partie de conduit 24 attenant au fond 11 de la cuve 10, les orifices complémentaires peuvent être sensiblement équirépartis le long de la deuxième partie de conduit 24. Ainsi, la vapeur V est injectée au niveau du fond 11 de la cuve 10 en plusieurs positions internes ou externes différentes, ce qui favorise son entrée au contact avec l'ensemble des aliments à cuire.

Les orifices complémentaires d'injection de vapeur peuvent présenter des dimensions différentes selon leur position dans la cuve 10. Par exemple, plus un orifice complémentaire d'injection de vapeur est situé en une position interne, plus sa dimension peut être grande, de sorte que davantage de vapeur V est injectée en une position interne de la cuve 10 qu'en une position externe de la cuve 10.

Dans un premier mode de réalisation, illustré à titre d'exemple non limitatif en figure 1, la cuve 10 peut former un récipient adapté pour accueillir les aliments à cuire. La cuve 10 peut également accueillir un moyen de cuisson tel que de l'eau ou de la matière grasse, par exemple de l'huile, du beurre ou de la graisse.

Les aliments à cuire, et le cas échéant le moyen de cuisson, sont disposés sur le fond 11 de la cuve 10, une couche basse des aliments étant au contact du fond 11 de la cuve 10. Le fond 11 de la cuve 10 peut être plein, de sorte à ne pas laisser s'échapper les aliments et/ou moyen de cuisson. En variante, le fond 11 peut présenter un ou plusieurs orifices traversants.

Lorsque le conduit de circulation de vapeur 20 est monté dans la cuve 10, c'est-à-dire à l'intérieur du volume de réception des aliments défini par le fond 11 et la paroi latérale 12 de la cuve 10, la buse d'injection de vapeur 22 débouche directement dans la cuve 10, au niveau du fond 11 de la cuve 10. La vapeur V est donc injectée à proximité immédiate des aliments reçus dans la cuve 10, ce qui permet une cuisson vapeur efficace des aliments.

En variante, le conduit de circulation de vapeur 20 peut être monté au moins en partie à l'extérieur d'un volume défini par le fond 11 et la paroi latérale 12 de la cuve 10. Par exemple, le conduit de circulation de vapeur 20 peut être monté dans sa quasi-intégralité hors de la cuve 10. Alors, la buse d'injection de vapeur 22 perce la paroi latérale 12 ou le fond 11 de la cuve 10 de sorte à injecter la vapeur V dans la cuve 10. Un tel conduit de circulation de vapeur 20 monté au moins en partie à l'extérieur de la cuve 10 permet d'éviter au conduit de circulation de vapeur 20 d'entrer en contact avec les aliments à cuire reçus dans la cuve 10, et d'éviter ainsi qu'il soit sali par les aliments à cuire.

La buse d'injection de vapeur 22 peut être située contre la paroi latérale 12 de la cuve 10. Le conduit de circulation de vapeur 20 débouche alors sur les côtés de la cuve 10, en une position externe de la cuve 10. La vapeur V entre donc en contact avec les aliments disposés en une position externe de la cuve 10 avant d'entrer en contact avec les aliments disposés en une position interne de la cuve 10.

En variante, la buse d'injection de vapeur 22 peut être située au niveau du fond 11 de la cuve 10 à distance de la paroi latérale 12 de la cuve 10. La buse d'injection de vapeur 22 débouche donc en une position du fond 11 de la cuve 10 qui est plus interne que la position de la paroi latérale 12. Par exemple, la buse d'injection de vapeur 22 peut déboucher sensiblement à proximité du centre du fond 11 de la cuve 10. La vapeur V est donc injectée en une position plus ou moins interne de la cuve 10. Une telle position de la buse d'injection de vapeur 22 peut améliorer l'homogénéité de la cuisson des aliments reçus dans la cuve 10.

Dans ce premier mode de réalisation, la vapeur V est injectée dans la cuve 10 de manière concentrée par la buse d'injection de vapeur 22, à proximité directe des aliments à cuire. Par conséquent, toute la vapeur V injectée entre rapidement en contact avec les aliments à cuire, et remonte à travers les aliments jusqu'à l'ouverture 13 de la cuve 10. La surface de contact entre la vapeur V et la cuve 10, donc la condensation de la vapeur V, en particulier à proximité de la buse d'injection de vapeur 22, est minimisée. La cuisson vapeur associée présente donc une efficacité améliorée.

Dans un deuxième mode de réalisation, illustré à titre d'exemple non limitatif en figure 2, l'enceinte comprend en outre un panier 30 destiné à être inséré de manière amovible dans la cuve 10. Le panier 30 comprend un fond 31 ajouré, une ouverture 33 opposée au fond 31 et une paroi latérale 32 adaptés pour définir un volume de réception d'aliments à cuire.

Le panier 30 forme donc un récipient adapté pour accueillir les aliments à cuire, et le cas échéant un moyen de cuisson. Les aliments à cuire, et le cas échéant le moyen de cuisson, sont disposés sur le fond 31 du panier 30, une couche basse des aliments étant au contact du fond 31 du panier 30.

Le panier 30 présente des dimensions inférieures à celles de la cuve 10 de sorte à pouvoir être inséré dans la cuve 10 ou retiré de la cuve 10. Le panier 30 définit avec la cuve 10 un espace de circulation d'air 34. En particulier, la paroi latérale 32 du panier 30 et le fond 31 du panier 30 sont maintenus respectivement à distance de la paroi latérale 12 de la cuve 10 et du fond 11 de la cuve 10 pour définir un espace de circulation d'air 34.

Le fond 31 du panier 30 et la paroi latérale 32 du panier 30 peuvent présenter une forme similaire au fond 11 de la cuve 10 et à la paroi latérale 12 de la cuve 10. En particulier, le fond 31 du panier 30 peut être sensiblement plan et la paroi latérale 32 de panier 30 peut s'étendre sensiblement orthogonalement au fond 31 du panier 30.

Le fond 31 du panier 30 peut présenter une forme de disque plan, et la paroi latérale 32 du panier 30 peut présenter une forme de cylindre de révolution de rayon correspondant sensiblement à un rayon du fond 31 du panier 30. Le rayon du cylindre défini par la paroi latérale 12 de la cuve 10 est supérieur au rayon du cylindre défini par la paroi latérale 32 du panier 30. Le rayon du disque défini par le fond 11 de la cuve 10 est supérieur au rayon du disque défini par le fond 32 du panier 30.

Le fond 31 du panier 30 et la paroi latérale 32 du panier 30 peuvent consister en une homothétie du fond 11 de la cuve 10 et de la paroi latérale 12 de la cuve 10, l'homothétie présentant un rapport inférieur à 1.

La paroi latérale 32 et le fond 31 du panier 30 peuvent être formés d'une seule pièce ou être rapportés et fixés l'un sur l'autre. La paroi latérale 32 du panier 30 peut présenter une extrémité basse raccordée au fond 31 du panier 30, et une extrémité haute libre délimitant l'ouverture 33 du panier 30, les aliments étant destinés à être insérés dans le panier 30 à travers l'ouverture 33 de panier 30.

Le fond 31 du panier 30 est ajouré, c'est-à-dire qu'il comprend un ou plusieurs orifices, tels que des perçages ou un grillage. Les orifices du fond 31 du panier 30 peuvent être répartis de manière sensiblement homogène sur une partie ou sur toute la surface du fond 31 du panier 30.

Les dimensions des orifices du fond 31 du panier 30 sont adaptées pour permettre un passage d'air chaud C et/ou de vapeur V à travers les orifices, sans autoriser un passage de morceaux solides d'aliments. Ainsi, les aliments ne risquent pas de traverser le fond 31 du panier 30 et d'être déposés sur le fond 11 de la cuve 10.

L'espace de circulation d'air 34 englobe un espace situé entre la paroi latérale 12 de la cuve 10 et la paroi latérale 32 du panier 30. L'espace de circulation d'air 34 est donc en partie situé en une position radialement externe par rapport à la paroi latérale 32 du panier 30 et radialement interne par rapport à la paroi latérale 12 de la cuve 10. Plus particulièrement, l'espace de circulation d'air 34 peut s'étendre en partie entre le cylindre défini par la paroi latérale 32 du panier 30 et le cylindre défini par la paroi latérale 12 de la cuve 10.

L'espace de circulation d'air 34 englobe en outre un espace situé entre le fond 11 de la cuve 10 et le fond 31 du panier 30. L'espace de circulation d'air 34 est donc en partie situé en une position plus basse que le fond 31 du panier 30, et plus haute que le fond 11 de la cuve 10. Plus particulièrement, l'espace de circulation d'air 34 peut s'étendre en partie entre le disque défini par le fond 31 du panier 30 et le disque défini par le fond 11 de la cuve 10.

Dans le deuxième mode de réalisation, le conduit de circulation de vapeur 20 est monté à l'extérieur du volume de réception des aliments défini par le fond 31 du panier 30, la paroi latérale 32 du panier 30 et l'ouverture 33 du panier 30. Ainsi, le conduit de circulation de vapeur 20 n'est pas en contact avec les aliments à cuire reçus dans le panier 30, et ne risque donc pas d'être sali par les aliments à cuire.

Le conduit de circulation de vapeur 20 présente des dimensions inférieures aux dimensions de l'espace de circulation d'air 34. Ainsi, la surface de contact entre la vapeur V et le conduit de circulation de vapeur 20 lorsque la vapeur V circule dans le conduit de circulation de vapeur 20 est plus faible que si la vapeur V était injectée directement dans l'espace de circulation d'air 34. La vapeur V n'entre pas en contact avec l'ensemble des parois de la cuve 10 et du panier 30, mais entre en contact avec une surface plus réduite, correspondant à la surface du conduit de circulation de vapeur 20. La condensation de la vapeur V résultant du contact entre la vapeur V et les parois froides du conduit de circulation de vapeur 20 est donc diminuée, notamment lorsque la cuve 10 et le panier 30 ne sont pas encore montés en température, par exemple en début de cuisson. Par conséquent, une partie plus importante de la vapeur V injectée est utilisée pour la cuisson, l'efficacité de la cuisson vapeur en étant améliorée. En outre, la cuisson vapeur V débute plus rapidement à compter du début de l'injection de vapeur V, puisqu'il n'est pas besoin d'attendre qu'une quantité importante de vapeur V condensée soit évacuée par l'utilisateur, ou soit de nouveau vaporisée une fois l'appareil suffisamment chaud.

Le conduit de circulation de vapeur 20 peut déboucher dans l'espace de circulation d'air 34, ainsi qu'illustré à titre d'exemple non limitatif en figure 2. Lorsque de l'air chaud C circule dans l'espace de circulation d'air 34, la vapeur V une fois injectée par la buse d'injection de vapeur 22 se mélange à l'air chaud C. Le mélange d'air chaud C et de vapeur V passe à travers le fond 31 ajouré du panier 30 de sorte à remonter à travers les aliments à cuire reçus dans le panier 30, pour être ensuite évacué par l'ouverture 33 du panier 30.

Le conduit de circulation de vapeur 20 peut déboucher dans l'espace de circulation d'air 34 en regard du fond 31 du panier 30, c'est-à-dire entre le fond 31 du panier 30 et le fond 11 de la cuve 10. Ainsi, la buse d'injection de vapeur 22 débouche à l'opposé de l'ouverture 33 du panier 30 par rapport à des aliments à cuire reçus dans l'enceinte. La vapeur V est injectée directement sous le fond 31 du panier 30, ce qui augmente la rapidité de cuisson vapeur.

En variante, le conduit de circulation de vapeur 20 peut déboucher dans l'espace de circulation d'air 34 en regard de la paroi latérale 32 du panier 30, c'est-à-dire entre la paroi latérale 32 du panier 30 et la paroi latérale 12 de la cuve 10. La vapeur V est alors mélangée à l'air chaud C circulant dans l'espace de circulation d'air 34 au niveau des parois latérales 12, 32 de cuve 10 et de panier 30. L'homogénéité du mélange de vapeur V et d'air chaud C est donc améliorée, ce qui conduit à une cuisson vapeur plus homogène.

En variante, le conduit de circulation de vapeur 20 peut comprendre une première partie de conduit 23 agencée le long de la paroi latérale 12 de la cuve 10, une deuxième partie de conduit 24 attenant au fond 11 de la cuve 10, et une troisième partie de conduit agencée pour s'étendre entre le fond 11 de la cuve 10 et le fond 31 du panier 30 lorsque le panier 30 est reçu dans l'enceinte, de sorte que la buse d'injection de vapeur 22 s'étend à travers un orifice du fond 31 du panier 30.

La première partie de conduit 23 s'étend alors depuis le haut de la cuve 10 vers le bas de la cuve 10, la deuxième partie 24 de conduit s'étend depuis une position externe de la cuve 10 vers une position interne de la cuve 10, et la troisième partie s'étend jusqu'au fond 31 du panier 30. Ainsi, la vapeur V est injectée directement dans le panier 30 par la buse d'injection de vapeur 22, de manière concentrée et à proximité directe des aliments à cuire.

### Appareil de cuisson

Un appareil de cuisson adapté pour réaliser une cuisson vapeur comprend une enceinte de cuisson et un châssis 50.

Le châssis 50 comprend un système de génération de vapeur 90. Le châssis 50 est prévu pour recevoir l'enceinte de manière amovible de sorte que lorsque l'enceinte est reçue dans le châssis 50, la première ouverture 21 du conduit de circulation de vapeur 20 est en communication fluidique avec le système de génération de vapeur 90. Ainsi, la vapeur V générée par le système de génération de vapeur 90 est amenée jusqu'à la première ouverture 21 du conduit de circulation de vapeur 20 puis circule dans le conduit de circulation de vapeur 20 depuis sa première ouverture 21 jusqu'à la buse d'injection de vapeur 22, avant d'être injectée dans l'enceinte.

Le châssis 50 peut présenter un renfoncement de dimensions et de forme sensiblement complémentaires des dimensions et de la forme de l'enceinte, de sorte que l'enceinte peut être mise en place de manière amovible dans le renfoncement du châssis 50. L'enceinte peut être mise en place dans le châssis 50 ou retirée du châssis 50 par une translation latérale de l'enceinte, le châssis étant fixe.

Le châssis 50 peut comprendre une partie basse 51 et une partie haute 52. L'enceinte peut être mise en place sur la partie basse 51 du châssis 50, de sorte à reposer sur la partie basse 51 du châssis 50. Le système de génération de vapeur 90 peut être mis en place dans la partie haute 52 du châssis 50 de l'appareil de cuisson. Ainsi, le système de génération de vapeur 90 est disposé au-dessus de l'enceinte lorsque celle-ci est mise en place dans le châssis 50.

Le châssis 50 peut comprendre en outre un réservoir à eau permettant d'alimenter en eau le système de génération de vapeur 90.

L'appareil de cuisson peut comprendre en outre des moyens de chauffage 70 du conduit de circulation de vapeur 20. Le conduit de circulation de vapeur 20 peut être chauffé jusqu'à une température pour laquelle le contact entre la vapeur V et la paroi du conduit de circulation de vapeur 20 ne provoque de condensation de la vapeur V. Ainsi, les moyens de chauffage 70 du conduit de circulation de vapeur 20 permettent de diminuer, voire d'éviter, la condensation de la vapeur V circulant dans le conduit de circulation de vapeur 20.

L'appareil de cuisson peut comprendre en outre un système d'étanchéité 100, tel qu'un joint d'étanchéité, adapté pour raccorder de manière étanche la première ouverture 21 du conduit de circulation de vapeur 20 et le système de génération de vapeur 90.

Le système d'étanchéité 100 est positionné de sorte que lorsque l'enceinte de cuisson est mise en place dans le châssis 50, l'enceinte de cuisson se plaque contre le système d'étanchéité 100. En particulier la première ouverture 21 du conduit de circulation de vapeur 20 peut se plaquer contre le système d'étanchéité 100. Ainsi, les pertes de la vapeur générée par le raccord entre le système de génération de vapeur 90 et le conduit de circulation de vapeur 20 sont minimisées, ce qui permet d'améliorer l'efficacité de la cuisson vapeur.

Le châssis 50 peut comprendre en outre un conduit de circulation de vapeur additionnel 91 pour relier le système de génération de vapeur 90 à la première ouverture 21 du conduit de circulation de vapeur 20 de l'enceinte. Le conduit de circulation de vapeur additionnel 91 comprend une première extrémité raccordée au système de génération de vapeur 90, et une deuxième extrémité raccordée à la première ouverture 21 du conduit de circulation de vapeur 20. Le système d'étanchéité 100 est adapté pour raccorder de manière étanche la deuxième extrémité du conduit de circulation de vapeur additionnel 91 et la première ouverture 21 du conduit de circulation de vapeur 20.

L'appareil de cuisson peut comporter en outre des moyens de cuisson additionnels intégrés dans le châssis 50. Les moyens de cuisson additionnels peuvent être des moyens de cuisson à air chaud et/ou des moyens de cuisson sous pression, et/ou des moyens de cuisson par mijotage. Les moyens de cuisson additionnels peuvent être utilisés indépendamment des moyens de cuisson vapeur décrits ci-dessus, par exemple simultanément avec les moyens de cuisson vapeur, ou successivement à ceux-ci. Ainsi, l'appareil de cuisson permet d'optimiser l'utilisation d'un ou plusieurs moyens de cuisson des aliments, et ainsi d'optimiser la cuisson des aliments.

Par exemple, le châssis 50 peut comprendre des moyens de cuisson à air chaud comprenant un dispositif de ventilation 60 adapté pour insuffler de l'air dans la cuve 10 de l'enceinte et des moyens de chauffage 70 disposés entre le dispositif de ventilation 60 et la cuve 10 de l'enceinte. Ainsi, l'air soufflé par le dispositif de ventilation 60 est chauffé par les moyens de chauffage 70 avant de pénétrer dans la cuve 10.

Le dispositif de ventilation 60 peut comprendre une turbine de brassage. Les moyens de chauffage 70 peuvent comprendre une résistance. Le dispositif de ventilation 60 et les moyens de chauffage 70 peuvent être situés dans la partie haute 52 du châssis 50, de sorte à être situés au-dessus de l'enceinte lorsque l'enceinte est mise en place dans l'appareil de cuisson.

La turbine de brassage 60 génère de l'air qui passe à travers la résistance 70 disposée entre la turbine de brassage 60 et la cuve 10 pour être chauffé avant d'être injecté en partie haute de la cuve 10. La vapeur V amenée par le conduit de circulation de vapeur 20 au niveau du fond 11 de la cuve 10 passe à travers les aliments à cuire avant d'être ré-aspirée par la turbine de brassage 60 et d'être évacuée par l'ouverture 13 de la cuve 10.

Le dispositif de ventilation 60 et les moyens de chauffage 70 peuvent être situés en une position interne du châssis 50, par exemple sensiblement centrale du châssis 50. Ainsi, l'air chaud C est injecté sensiblement au centre de la cuve 10, ce qui conduit à une cuisson homogène des aliments par l'air chaud C.

Dans le deuxième mode de réalisation, c'est-à-dire lorsque l'enceinte comprend un panier 30, les moyens de cuisson à air chaud comprennent en outre un élément déflecteur 80 adapté pour dévier l'air soufflé par le dispositif de ventilation 60 et chauffé par les moyens de chauffage 70 vers l'espace de circulation d'air 34.

L'élément déflecteur 80 peut être situé dans la partie haute 52 du châssis 50, sensiblement en regard du dispositif de ventilation 60 et des moyens de chauffage 70. L'élément déflecteur 80 peut être situé entre le dispositif de ventilation 60 et les moyens de chauffage 70, ou en aval du dispositif de ventilation 60 et des moyens de chauffage 70.

L'élément déflecteur 80 peut être situé en une position sensiblement centrale du châssis 50. L'élément déflecteur 80 est configuré pour dévier l'air chaud C vers l'espace de circulation d'air 34 situé en une position externe de la cuve 10.

L'élément déflecteur 80 peut être configuré pour dévier l'air chaud C depuis une position centrale de manière sensiblement homogène dans toutes les directions radiales vers l'espace de circulation d'air 34. Ainsi, l'air chaud C circule de manière sensiblement homogène dans tout l'espace de circulation d'air 34. Les parois latérales 12, 32 de la cuve 10 et du panier 30 sont donc chauffées de manière sensiblement homogène, et les aliments reçus dans le panier 30 sont cuits de manière sensiblement homogène quelle que soit leur position dans le panier 30.

L'air chaud C généré par le dispositif de ventilation 60 et chauffé par les moyens de chauffage 70 est dévié par l'élément déflecteur 80. L'air chaud C descend dans l'espace de circulation d'air 34 entre la cuve 10 et le panier 30, l'élément déflecteur 80 empêchant sa ré-aspiration par la turbine de brassage 60. En particulier, l'air chaud C dévié par le déflecteur 80 circule dans l'espace de circulation d'air 34 entre la paroi latérale 32 du panier 30 et la paroi latérale 12 de la cuve 10, depuis le haut vers le bas de la cuve 10, puis circule dans l'espace de circulation d'air 34 entre le fond 31 du panier 30 et le fond 11 de la cuve 10, depuis une position externe vers une position interne de la cuve 10. L'air chaud C descend donc sous le panier 30, puis remonte à travers le fond ajouré du panier 30 et à travers les aliments reçus dans le panier 30. L'air chaud C est ensuite en partie dérivé via l'ouverture 33 du panier 30 et via l'échappement, ce qui permet d'évacuer la vapeur générée par la cuisson des aliments.

Lorsque de la vapeur est générée par le système de génération de vapeur 90, l'air chaud C est mélangé avec la vapeur V injectée par la buse d'injection de vapeur 22. L'air chaud C mélangé avec la vapeur V traverse le fond 31 ajouré du panier 30 de sorte à remonter à travers les aliments à cuire reçus dans le panier 30, jusqu'à s'échapper par l'ouverture 33 du panier 30. La vapeur V est injectée à distance de l'élément déflecteur 80, au niveau du fond 31 du panier 30 et ne donc risque pas d'être réaspirée par le dispositif de ventilation 60 sans être entrée en contact avec les aliments. Toute la vapeur V injectée contribue donc à la cuisson des aliments.

Le châssis 50 peut comprendre une interface de commande de cuisson adaptée pour contrôler les moyens de cuisson vapeur et le cas échéant les moyens de cuisson additionnels. L'interface de commande peut être disposée sur le châssis 50, de sorte à être visible et contrôlable par un utilisateur de l'appareil de cuisson. L'interface de commande peut comprendre un moyen, par exemple un bouton, de commande d'un démarrage et/ou d'un arrêt de la cuisson à air chaud et/ou de la cuisson sous pression et/ou de la cuisson par mijotage et/ou de la cuisson vapeur.

L'interface de commande peut, en alternative ou en outre, être conçue pour permettre à l'utilisateur de programmer et/ou de préprogrammer un cycle de cuisson comprenant une ou plusieurs étapes de cuisson, successives ou combinées. Ainsi, l'utilisateur peut définir la cuisson la plus adaptée aux aliments reçus dans l'enceinte.

### Procédé de cuisson

Le fonctionnement des variantes de réalisation illustrées sur les figures va maintenant être décrit de manière détaillée. Le procédé de cuisson est destiné à être mis en oeuvre au moyen d'un appareil de cuisson tel que décrit ci-dessus.

Le procédé de cuisson comprend une étape de génération de vapeur V par le système de génération de vapeur 90. La vapeur V générée débouche de la buse d'injection de vapeur 22 au niveau du fond 11 de la cuve 10 de l'enceinte, puis circule dans la cuve 10 de l'enceinte depuis le fond 11 vers l'ouverture 13 de la cuve 10.

Le procédé de cuisson peut comprendre une étape de chauffage du conduit de circulation de vapeur 20 à l'aide de moyens de chauffage 70. L'étape de chauffage est réalisée antérieurement à ou conjointement avec l'étape de génération de vapeur. Ainsi, le conduit de circulation de vapeur 20 est chauffé, ce qui permet de diminuer, voire d'éviter, la condensation de la vapeur V y circulant, et ainsi d'améliorer l'efficacité de la cuisson vapeur.

L'étape de génération de vapeur par le système de génération de vapeur 90 peut être initiée lorsqu'une température dans la cuve 10 dépasse un seuil prédéterminé. Par exemple, la température prédéterminée peut correspondre sensiblement à la température d'ébullition de l'eau. Ainsi, la cuisson vapeur est initiée dès le début de la génération de vapeur, et la condensation de vapeur V lors de sa circulation dans le conduit de circulation de vapeur 20 est diminuée, voire évitée. L'efficacité de la cuisson vapeur est donc améliorée.

Le procédé de cuisson peut comprendre une étape de cuisson additionnelle, en plus de l'étape de cuisson vapeur réalisée lors de la génération de vapeur, par le biais d'un ou de plusieurs moyens de cuisson additionnels. L'étape de cuisson additionnelle peut comprendre une étape de cuisson à air chaud et/ou une étape de cuisson sous pression et/ou une étape de cuisson par mijotage.

L'étape de cuisson vapeur peut être réalisée antérieurement à, simultanément avec, ou postérieurement à, l'étape de cuisson additionnelle. Les caractéristiques telles que la nature, la durée, ou le nombre, de l'étape de cuisson additionnelle, peuvent être déterminées de sorte à optimiser la cuisson des aliments reçus dans la cuve 10.

Par exemple, le procédé peut comprendre une étape de cuisson à air chaud seule, puis une étape de cuisson vapeur seule, puis une étape de cuisson à air chaud seule. Un tel procédé permet d'améliorer les performances organoleptiques de la cuisson de frites.

En variante, le procédé peut comprendre une étape combinée de cuisson à air chaud et de cuisson vapeur, la cuisson à air chaud et la cuisson vapeur étant réalisées simultanément. De la vapeur V est générée par le système de génération de vapeur 90 et injectée dans la cuve 10 par la buse d'injection de vapeur 22. En même temps, de l'air est soufflé par le dispositif de ventilation 60, chauffé par les moyens de chauffage 70, et injecté dans la cuve 10. Un tel procédé comprenant une étape combinée de cuisson à air chaud et de cuisson vapeur améliore l'efficacité de la cuisson de certains aliments. L'étape combinée de cuisson à air chaud et de cuisson vapeur peut par exemple être réalisée antérieurement à une étape de cuisson à air chaud seule.

Un exemple d'utilisation de l'appareil de cuisson par un utilisateur est décrit ci-dessous.

L'utilisateur retire l'enceinte de l'appareil de cuisson du châssis 50, par exemple en empoignant l'enceinte par la poignée 40 et en la déplaçant suivant une translation latérale.

L'utilisateur introduit ensuite les aliments, et le cas échéant le moyen de cuisson, dans l'enceinte. Dans le premier mode de réalisation, l'utilisateur introduit les aliments dans la cuve 10 par l'ouverture 13 de la cuve 10. Dans le deuxième mode de réalisation, l'utilisateur introduit les aliments dans le panier 30 par l'ouverture 33 du panier 30.

L'utilisateur met ensuite en place l'enceinte dans le châssis 50 de l'appareil de cuisson, par exemple par un mouvement opposé au mouvement de retrait de l'enceinte par rapport au châssis 50.

L'utilisateur lance alors la cuisson des aliments via l'interface de commande disposée sur le châssis 50, par exemple en initiant une étape de cuisson vapeur. Le cas échéant, l'utilisateur lance une étape de cuisson additionnelle, simultanément ou successivement à l'étape de cuisson vapeur.

A la fin de la cuisson, l'utilisateur retire l'enceinte contenant les aliments cuits du châssis 50, et sort les aliments cuits, l'utilisateur pouvant alors consommer les aliments cuits.

L'enceinte de cuisson, l'appareil de cuisson et le procédé de cuisson décrits ci-dessus permettent de réaliser une cuisson vapeur efficace des aliments, le cas échéant combinée avec un ou plusieurs mode(s) de cuisson additionnel(s). Le procédé peut être adapté à tout type d'aliments, par exemple des morceaux de pommes de terre destinées à devenir des frites, des légumes ou des morceaux de légumes de diverse nature.

## Revendications

1. Enceinte de cuisson destinée à être insérée dans un appareil de cuisson pour réaliser une cuisson vapeur, l'enceinte comprenant une cuve (10) ayant un fond (11), une paroi latérale (12), et une ouverture (13) opposée au fond (11), **caractérisée en ce que** l'enceinte comprend en outre un conduit de circulation de vapeur (20) s'étendant entre une première ouverture (21) prévue pour être mise en communication fluidique avec un système de génération de vapeur (90) de l'appareil de cuisson, et une deuxième ouverture (22) formant une buse d'injection de vapeur, la buse d'injection de vapeur (22) étant agencée pour déboucher au niveau du fond (11) de la cuve (10) pour une circulation de vapeur (V) depuis le fond (11) de la cuve (10) vers l'ouverture (13) de la cuve (10).

2. Enceinte de cuisson selon la revendication 1, dans laquelle le conduit de circulation de vapeur (20) s'étend au moins en partie parallèlement à la paroi latérale (12) de la cuve (10).

3. Enceinte de cuisson selon l'une des revendications 1 ou 2, dans laquelle le conduit de circulation de vapeur (20) présente une première partie de conduit (23) agencée le long de la paroi latérale (12) de la cuve (10) et une deuxième partie de conduit (24) attenant au fond (11) de la cuve (10).

4. Enceinte de cuisson selon l'une quelconque des revendications 1 à 3, dans laquelle le conduit de circulation de vapeur (20) est agencé à l'intérieur d'un volume défini par le fond (11) et la paroi latérale (12) de la cuve (10).

5. Enceinte de cuisson selon l'une quelconque des revendications 1 à 3, dans laquelle le conduit de circulation de vapeur (20) est agencé au moins en partie à l'extérieur d'un volume défini par le fond (11) et la paroi latérale (12) de la cuve (10).

6. Enceinte de cuisson selon l'une des revendications 1 à 5, dans laquelle le conduit de circulation de vapeur (20) comprend des orifices complémentaires formant chacun un orifice d'injection de vapeur, les orifices d'injection de vapeur étant répartis le long du conduit de circulation de vapeur (20).

7. Enceinte de cuisson selon l'une quelconque des revendications 1 à 6, comprenant en outre un panier (30) destiné à être inséré de manière amovible dans la cuve (10), le panier (30) comprenant un fond (31) ajouré, une ouverture (33) opposée au fond (31) et une paroi latérale (32) adaptés pour définir un volume de réception d'aliments à cuire, la paroi latérale (32) du panier (30) et le fond (31) du panier (30) étant maintenus respectivement à distance de la paroi latérale (12) de la cuve (10) et du fond (11) de la cuve (10) pour définir un espace de circulation d'air (34).

8. Appareil de cuisson comprenant une enceinte de cuisson selon l'une quelconque des revendications précédentes et un châssis (50) comprenant un système de génération de vapeur (90), le châssis (50) étant prévu pour recevoir l'enceinte de manière amovible de sorte que lorsque l'enceinte est reçue dans le châssis (50), la première ouverture (21) du conduit de circulation de vapeur (20) est en communication fluidique avec le système de génération de vapeur (90).

9. Appareil de cuisson selon la revendication 8, comprenant en outre des moyens de chauffage du conduit de circulation de vapeur (20).

10. Appareil de cuisson selon la revendication 8 ou 9, comprenant en outre un système d'étanchéité (100) adapté pour raccorder de manière étanche la première ouverture (21) du conduit de circulation de vapeur (20) et le système de génération de vapeur (90).

11. Appareil de cuisson selon l'une quelconque des revendications 8 à 10, dans lequel le châssis (50) comprend un conduit de circulation de vapeur additionnel (91) pour relier le système de génération de vapeur (90) à la première ouverture (21) du conduit de circulation de vapeur (20) de l'enceinte.

12. Appareil de cuisson selon l'une quelconque des revendications 8 à 11, dans lequel le châssis (50) comprend en outre un dispositif de ventilation (60) adapté pour insuffler de l'air dans la cuve (10) de l'enceinte, et des moyens de chauffage (70) disposés entre le dispositif de ventilation (60) et la cuve (10) de l'enceinte.

13. Procédé de cuisson destiné à être mis en oeuvre au moyen d'un appareil de cuisson selon l'une quelconque des revendications 8 à 12, le procédé comprenant une étape de génération de vapeur par le système de génération de vapeur (90), dans lequel la vapeur générée débouche de la buse d'injection de vapeur (22) au niveau du fond (11) de la cuve (10) de l'enceinte, puis circule dans la cuve (10) depuis le fond (11) de la cuve (10) vers l'ouverture (13) de la cuve (10).

14. Procédé de cuisson selon la revendication 13, comprenant en outre une étape de chauffage du conduit de circulation de vapeur (20) à l'aide de moyens de chauffage, dans lequel l'étape de chauffage est réalisée antérieurement à ou conjointement avec l'étape de génération de vapeur.

## Patentansprüche

1. Kochgefäß, das dazu bestimmt ist, in eine Kocheinrichtung eingesetzt zu werden, um ein Dampfkochen durchzuführen, wobei das Gefäß einen Behälter (10) mit einem Boden (11), einer Seitenwand (12) und einer dem Boden (11) gegenüberliegenden Öffnung (13) umfasst, **dadurch gekennzeichnet, dass** das Gefäß weiter eine Dampfzirkulationsleitung (20) umfasst, die sich zwischen einer ersten Öffnung (21), die vorgesehen ist, um mit einem Dampferzeugungssystem (90) der Kocheinrichtung in strömungstechnische Kommunikation gebracht zu werden, und einer zweiten Öffnung (22) erstreckt, die eine Dampfinjektionsdüse bildet, wobei die Dampfinjektionsdüse (22) angeordnet ist, um für eine Dampfzirkulation (V) von dem Boden (11) des Behälters (10) in Richtung der Öffnung (13) des Behälters (10) auf Höhe des Bodens (11) des Behälters (10) zu münden.

2. Kochgefäß nach Anspruch 1, wobei sich die Dampfzirkulationsleitung (20) mindestens zum Teil parallel zu der Seitenwand (12) des Behälters (10) erstreckt.

3. Kochgefäß nach einem der Ansprüche 1 oder 2, wobei die Dampfzirkulationsleitung (20) einen ersten Leitungsteil (23), der entlang der Seitenwand (12) des Behälters (10) angeordnet ist, und einen zweiten Leitungsteil (24) aufweist, den an den Boden (11) des Behälters (10) angrenzt.

4. Kochgefäß nach einem der Ansprüche 1 bis 3, wobei die Dampfzirkulationsleitung (20) im Inneren eines durch den Boden (11) und die Seitenwand (12) des Behälters (10) definierten Volumens angeordnet ist.

5. Kochgefäß nach einem der Ansprüche 1 bis 3, wobei die Dampfzirkulationsleitung (20) mindestens zum Teil außerhalb eines durch den Boden (11) und die Seitenwand (12) des Behälters (10) definierten Volumens angeordnet ist.

6. Kochgefäß nach einem der Ansprüche 1 bis 5, wobei die Dampfzirkulationsleitung (20) komplementäre Löcher umfasst, die jeweils ein Dampfinjektionsloch bilden, wobei die Dampfinjektionslöcher entlang der Dampfzirkulationsleitung (20) verteilt sind.

7. Kochgefäß nach einem der Ansprüche 1 bis 6, weiter umfassend einen Korb (30), der dazu bestimmt ist, auf eine herausnehmbare Weise in den Behälter (10) eingesetzt zu werden, wobei der Korb (30) einen durchbrochenen Boden (31), eine dem Boden (31) gegenüberliegende Öffnung (33) und eine Seitenwand (32) umfasst, die angepasst sind, um ein Aufnahmevolumen für zu kochende Lebensmittel zu definieren, wobei die Seitenwand (32) des Korbs (30) und der Boden (31) des Korbs (30) jeweils von der Seitenwand (12) des Behälters (10) und vom Boden (11) des Behälters (10) auf Abstand gehalten werden, um einen Luftzirkulationsraum (34) zu definieren.

8. Kocheinrichtung, umfassend ein Kochgefäß nach einem der vorstehenden Ansprüche und einen Grundkörper (50), der ein Dampferzeugungssystem (90) umfasst, wobei der Grundkörper (50) dazu vorgesehen ist, das Gefäß derart auf herausnehmbare Weise aufzunehmen, dass, wenn das Gefäß in den Grundkörper (50) aufgenommen wird, die erste Öffnung (21) der Dampfzirkulationsleitung (20) in strömungstechnischer Kommunikation mit dem Dampferzeugungssystem (90) steht.

9. Kocheinrichtung nach Anspruch 8, weiter umfassend Erwärmungsmittel der Dampfzirkulationsleitung (20).

10. Kocheinrichtung nach Anspruch 8 oder 9, weiter umfassend ein Dichtungssystem (100), das angepasst ist, um die erste Öffnung (21) der Dampfzirkulationsleitung (20) und das Dampferzeugungssystem (90) auf dichte Weise zu koppeln.

11. Kocheinrichtung nach einem der Ansprüche 8 bis 10, wobei der Grundkörper (50) eine zusätzliche Dampfzirkulationsleitung (91) umfasst, um das Dampferzeugungssystem (90) mit der ersten Öffnung (21) der Dampfzirkulationsleitung (20) des Gefäßes zu verbinden.

12. Kocheinrichtung nach einem der Ansprüche 8 bis 11, wobei der Grundkörper (50) weiter eine Lüftungsvorrichtung (60), die angepasst ist, um Luft in den Behälter (10) des Gefäßes zu blasen, und Erwärmungsmittel (70) umfasst, die zwischen der Lüftungsvorrichtung (60) und dem Behälter (10) des Gefäßes angebracht sind.

13. Verfahren zum Kochen, das dazu bestimmt ist, mittels einer Kocheinrichtung nach einem der Ansprüche 8 bis 12 ausgeführt zu werden, wobei das Verfahren einen Schritt der Dampferzeugung durch das Dampferzeugungssystem (90) umfasst, wobei der erzeugte Dampf aus der Dampfinjektionsdüse (22) auf Höhe des Bodens (11) des Behälters (10) des Gefäßes mündet, danach von dem Boden (11) des Behälters (10) in Richtung der Öffnung (13) des Behälters (10) in dem Behälter (10) zirkuliert.

14. Verfahren zum Kochen nach Anspruch 13, weiter umfassend einen Schritt des Erwärmens der Dampfzirkulationsleitung (20) mithilfe der Erwärmungsmittel, wobei der Schritt des Erwärmens vor oder gleichzeitig mit dem Schritt der Dampferzeugung durchgeführt wird.

## Claims

1. Cooking enclosure intended to be inserted into a cooking appliance in order to carry out steam cooking, the enclosure comprising a vessel (10) having a bottom (11), a side wall (12), and an opening (13) opposite the bottom (11), **characterised in that** the enclosure further comprises a steam flow duct (20) extending between a first opening (21) intended to be placed in fluid communication with a steam generation system (90) of the cooking appliance, and a second opening (22) forming a steam injection nozzle, the steam injection nozzle (22) being designed to emerge at the bottom (11) of the vessel (10) for a flow of steam (V) from the bottom (11) of the vessel (10) to the opening (13) of the vessel (10).

2. Cooking enclosure according to claim 1, wherein the steam flow duct (20) extends at least partly parallel to the side wall (12) of the vessel (10).

3. Cooking enclosure according to any one of claims 1 or 2, wherein the steam flow duct (20) has a first duct portion (23) arranged along the side wall (12) of the vessel (10) and a second duct portion (24) adjoining the bottom (11) of the vessel (10).

4. Cooking enclosure according to any one of claims 1 to 3, wherein the steam flow duct (20) is arranged inside a volume defined by the bottom (11) and the side wall (12) of the vessel (10).

5. Cooking enclosure according to any one of claims 1 to 3, wherein the steam flow duct (20) is arranged at least partly outside a volume defined by the bottom (11) and the side wall (12) of the vessel (10).

6. Cooking enclosure according to any one of claims 1 to 5, wherein the steam flow duct (20) comprises complementary apertures each forming a steam injection aperture, the steam injection apertures being distributed along the steam flow duct (20).

7. Cooking enclosure according to any one of claims 1 to 6, further comprising a basket (30) intended to be removably inserted into the vessel (10), the basket (30) comprising a perforated bottom (31), an opening (33) opposite the bottom (31) and a side wall (32) designed to define a volume for receiving food to be cooked, the side wall (32) of the basket (30) and the bottom (31) of the basket (30) being held respectively at a distance from the side wall (12) of the vessel (10) and from the bottom (11) of the vessel (10) in order to define an air flow space (34).

8. Cooking appliance comprising a cooking enclosure according to any one of the preceding claims and a frame (50) comprising a steam generation system (90), the frame (50) being intended to receive the enclosure in a removable manner so that when the enclosure is received in the frame (50), the first opening (21) of the steam flow duct (20) is in fluid communication with the steam generation system (90).

9. Cooking appliance according to claim 8, further comprising means for heating the steam flow duct (20).

10. Cooking appliance according to claim 8 or 9, further comprising a sealing system (100) designed to connect, in a sealed manner, the first opening (21) of the steam flow duct (20) to the steam generation system (90).

11. Cooking appliance according to any one of claims 8 to 10, wherein the frame (50) comprises an additional steam flow duct (91) for connecting the steam generation system (90) to the first opening (21) of the steam flow duct (20) of the enclosure.

12. Cooking appliance according to any one of claims 8 to 11, wherein the frame (50) further comprises a ventilation device (60) designed to blow air into the vessel (10) of the enclosure, and heating means (70) arranged between the ventilation device (60) and the vessel (10) of the enclosure.

13. Cooking method intended to be implemented by means of a cooking apparatus according to any one of claims 8 to 12, the method comprising a step of steam generation by the steam generation system (90), wherein the generated steam emerges from the steam injection nozzle (22) at the bottom (11) of the vessel (10) of the enclosure, and then flows through the vessel (10) from the bottom (11) of the vessel (10) to the opening (13) of the vessel (10).

14. Cooking method according to claim 13, further comprising a step of heating the steam flow duct (20) using heating means, wherein the heating step is carried out prior to or in conjunction with the steam generation step.
